# EUROPEAN PATENT SPECIFICATION

(11) **EP 2 747 248 B1**
(45) Date of publication and mention of the grant of the patent: **21.06.2017**
(21) Application number: 12199035.2
(22) Date of filing: 21.12.2012
(51) Int. Cl.: H02K 1/27, H02K 15/03, H02K 1/32

(54) **Magnetic rotor unit**
Magnetrotoreinheit
Unité de rotor magnétique

(43) Date of publication of application: 25.06.2014
(73) Proprietor: Grundfos Holding A/S, 8850 Bjerringbro (DK)
(72) Inventor: Vad, Martin, 8930 Randers NØ (DK); Kammersgaard, Carsten, 8850 Bjerringbro (DK)
(74) Representative: Patentanwälte Vollmann & Hemmer

(56) References cited:
- DE-A1- 10 152 151
- GB-A- 1 269 317
- US-A- 5 121 021
- US-A1- 2002 047 329

## Description

The invention relates to a magnetic rotor unit for an electric motor with the features specified in the preamble of claim 1 and a method for fabricating a magnetic rotor unit by injection-moulding with the features specified in the preamble of claim 14.

US 5,121,021 discloses a stator for a dynamo-electric machine which is composed of a synthetic material, into which permanent magnets as well as a fixed bearing part of a bearing are integrated by moulding. In this stator a separate rotor with a movable bearing part is inserted. By way of this the alignment of the fixed and the movable bearing part to each other is problematic.

DE 101 52 151 A1 discloses a permanent magnetic rotor of an electric motor comprising permanent magnets and a rotatable bearing part connected to the rotor by a moulding process. This rotor has to be attached to a fixed shaft forming the fixed part of the bearing. Thus, also for this bearing a further assembling step is required.

Electric motors, for example used in circulation pumps, are known comprising a magnetic rotor unit fabricated by injection-moulding. However, when mounting the rotor into a motor bearings have to be attached and aligned to the moulded rotor. Therefore, further mounting steps are required.

It is the object of the invention to provide an improved rotor for an electric motor allowing a simplified mounting of the rotor.

This object is achieved by a magnetic rotor unit for an electric motor with the features specified in claim 1 and a method for fabricating a magnetic rotor unit by injection moulding with the features specified in claim 14. Preferred embodiments are defined in the dependent claims, the subsequent description as well as the attached figures.

The magnetic rotor unit according to the invention as a part of a pump for example, especially as a part of a circulation pump comprises a rotor unit manufactured from plastic material and consisting of a magnetic unit and at least one bearing unit comprising a first bearing surface arranged in rotatable fixed manner to a rotor shaft and a second bearing surface being rotatable relative to the first bearing surface, wherein said bearing unit forms an assembly group and said bearing unit is connected to the magnet unit by moulding. Both, first and second bearing surfaces are the facing surfaces of a bearing and the facing surfaces are moveably to each other in contact. The bearing may preferably be designed with at least one bearing ring. Each bearing unit consists of said at least one bearing and a rotor shaft. During the moulding process of the rotor shaft the bearing is connected to or formed onto the rotor shaft. In the same moulding process the rotor shaft is connected to the magnet unit. So there is no additional mounting step for attaching the bearing to the rotor shaft and there is no need of additional connection means between the bearing unit and the magnet unit. This may shorten the production process and reduce the manufacturing effort. Additionally there is no need of additional connection means between bearing and rotor shaft.

The connection of the bearing to the rotor shaft by moulding also offers the possibility to scale down the electric motor and especially the size of the magnetic rotor unit. The speed of the magnetic rotor unit can be the same or even higher. The power of the pump can range between 2 W and 40 W, preferably between 5 W and 20 W. The length of the magnetic rotor unit can scale down between 20 mm and 80 mm, preferably about 40 mm and the diameter of the rotor shaft can be in the range of 6 mm to 10 mm, preferably approximately 7 or 8 mm.

In one preferred embodiment at least a part of the bearing unit carrying the first bearing surface and connected in rotatable fixed manner to the magnet unit is preferably formed by moulding. Therefore, only the part of the bearing carrying the second bearing surface, for example as part of a bearing ring, has to be inserted into the mould prior to moulding. The required clearance between the bearing surfaces may be achieved by shrinkage of the moulded material during solidification and cooling.

In an alternative embodiment of the invention the first bearing surface to be connected to the magnetic unit in rotatable fixed manner is provided on a bearing part like a bearing ring inserted together with a second bearing part carrying the second bearing surface in a preassembled manner into the moulding tool prior to the moulding of the rotor shaft to be connected with the magnet unit. By moulding of the rotor shaft the plastic material of the rotor shaft comes into direct contact with the bearing part defining the first bearing surface providing a secure connection between this bearing part and the rotor shaft. To enhance this connection the bearing part may be provided with a structured or roughened surface coming into contact with the plastic material.

Further preferred the bearing surfaces of the bearing unit or the parts defining these surfaces are connected with one another non-detachably. This means that the second bearing surface is rotatable relative to the first bearing surface but it is not possible to remove the second bearing surface from the first bearing surface without destroying. The bearing therefore for example is axially secured such that the bearing forms a preassembled unit which may be handled as a single unit prior to the moulding. For example the bearing unit comprises an inner and an outer bearing ring which are connected such that they are rotatable but axially fixed with one another.

As a preferred embodiment of the electric motor the at least one bearing unit comprises a radial and/or an axial bearing. Preferably, one bearing unit may comprise both, an axial as well as a radial bearing.

Preferably the first bearing surface is formed by the outer surface of the moulded rotor shaft connected to the magnet unit. Thus the first bearing surface may be moulded together with the rotor shaft. Therefore, the first bearing surface may be made of the plastic material used in the injection moulding process for the rotor shaft. Due to the friction between the first and second bearing surface the used plastic material should have a certain abrasion hardness. If this hardness of the plastic material is not needed for the rotor shaft itself, it can be profitable to manufacture the shaft together with a first bearing surface by multi-component injection moulding, where one component is the plastic material with the required hardness for the first bearing surface and another plastic material is used to form the remaining parts of the rotor shaft according to the required properties of these parts as well as financial and economical reasons. Concerning local differences of required abrasion resistance in the bearing it may be preferable that parts of the first bearing surface are formed by the outer surface of the moulded shaft and other parts of the first bearing surface may be defined by a preassembled bearing connected to the rotor shaft during the moulding.

Preferably the outer surface, i. e. the radial outer surface of the first bearing surface in axial direction has a plain surface or a curved shape. In this case, the bearing is acting as a radial bearing. The curved shape can limit the movement of the second bearing surface relative to the first bearing surface along the axial direction of the rotor unit and provides axial fixation. The bearing with a curved shaped first and second surface can also adjust certain angle errors by itself.

A certain movement of the second bearing surface along the longitudinal axis may be tolerable. Preferably a ring-shaped groove at the outer circumference of the rotor shaft is provided next to at least one first bearing surface of a radial bearing at at least one axial side of the bearing surface. The groove permits certain movements along the longitudinal axis without additional or even higher friction.

To limit the axial movement, especially for the first bearing surface with a plain surface at the outer surface in axial direction, it is preferable that next to at least one axial side of the bearing surface or next to said groove the outer diameter of the rotor shaft is greater than the inner diameter of the second bearing surface. If the part of the bearing carrying the first bearing surface, i. e. the rotor shaft moves too much along the axial direction, the part carrying the second bearing surface will get into contact with the rotor shaft having a greater diameter and therefore stop the axial movement of the rotor shaft along said direction. Especially during the start-up of the electric motor this axial bearing can be quite helpful for stabilizing the longitudinal movement of the magnetic rotor unit till reaching the operating point. Both surfaces, which are in contact in axial direction, can be understood as parts of said first and second surfaces or as additional first and second surfaces respectively. Furthermore, by this design the part carrying the second bearing surface, for example an outer bearing ring is prevented from being disconnected from the rotor shaft prior to assembling the rotor unit in the electric motor.

The magnet unit further preferably comprises at least one magnet and/or at least one plastic bonded magnet and a sleeve enclosing at least the part of the rotor unit including the magnet and/or the plastic bonded magnet, wherein at least one axial end section of the sleeve is directed radially inwardly. It is quite usual to use permanent magnets in a rotor unit for an electric motor. Plastic bonded magnets are used because it eases the manufacturing by injecting moulding. The magnets mostly consist of ferromagnetic material or compounds. To protect the magnets against corrosion, the sleeve encloses the part of the rotor with the magnets. At least one axial end, preferably both axial ends of the sleeve are bent radially inwardly, so that the moulding material of the rotor shaft can border the bent part of the sleeve from inner side as well as outer side of the sleeve This enclosing of the bent parts of the sleeve increases the sealing of the magnet unit and especially the magnets against infiltration of fluids. This is preferred in particular for the use in a wet-running electric motor as used in pump units. By the sleeve the magnets are prevented from coming into contact with a fluid in particular water inside the rotor space. The sleeve preferably is made of stainless steel or another suitable fluid-tight material

Preferably, at least one magnet and/or at least one plastic bonded magnet moulded into the plastic material is designed isotropic or anisotropic. The magnetic anisotropy of the magnets in the magnetic unit is realized by an appropriate magnetic field during the moulding of the magnet unit. This allows an adapted alignment of the magnetic field of each magnet for the specific embodiment of the electric motor. Additionally the magnet and/or the plastic bonded magnet comprises a neodymium alloy. Neodymium alloys, especially neodymium magnet, e. g. Nd₂Fe₁₄B, feature a very high remanent magnetization. They also exhibit a very high coercivity.

To improve the connection between the moulded rotor shaft and the magnet unit, the magnet unit preferably comprises a connection piece, preferably a tenon or a notch, which is moulded within the bearing unit with positive locking. At first, the magnet unit is moulded, wherein the connection piece is formed as part of the magnet unit by the moulding material of the magnet unit. In a next moulding step, one or more bearing units are moulded and at the same time connected to the magnet unit in rotatable fixed manner. I. e. the magnet unit moulded before is placed into the mould for forming the bearing unit prior to the moulding of the bearing unit. The plastic material of the rotor shaft as part of the bearing unit fills at least one connection piece and/or encloses the connection piece during this moulding step. Thus, the connection piece allows a positive-fit or locking between the bearing unit and the magnetic unit. The connecting piece as a magnet unit may be formed as a projection and/or recess, preferably having at least one undercut or backtaper, respectively, to allow this positive-fit.

The bearing unit preferably is attached to the axial end of the magnet unit. Further preferred two bearing units are attached to both axial ends of the magnetic unit to ensure a stable bearing of the rotor. For a secure connection a connecting piece as described above may be provided at the axial end side of the magnetic unit, preferably extending in axial direction in rotation-symmetric manner.

Preferably at least one part of the bearing unit consists of ceramics. Ceramics provide a high mechanical resistance. The abrasion hardness as well as friction resistance is also high. Most ceramics are corrosion resistant and have a high hardness. They also often provide a high thermal resistance. For example the part carrying the second bearing surface may be formed as a bearing ring from ceramics, wherein the inner surface of the ring forms the second bearing surface. Additionally or alternatively also the first bearing surface, for example an inner bearing surface of an axial bearing may be provided on a ceramic part like a ceramic ring moulded into the rotor shaft as described above.

In a preferable embodiment the part of the bearing unit comprising the second bearing surface is made of plastic material. Preferably the part of the bearing unit comprising the second bearing surface is an outer bearing ring and the second bearing surface is an outer bearing surface of a radial bearing. To make this part of the bearing from plastic material allows the cheap and easy manufacturing of the entire bearing unit, since also a part of the bearing unit comprising the second bearing surface can be produced by injection moulding. Further, the part comprising the first bearing surface and the part comprising the second bearing surface can be brought into contact directly so that no further assembling steps are required. Further, the use of plastic material for the outer ring can be useful concerning the material expansion and shrinkage due to temperature variations. The plastic material for the outer ring should preferably be different to the material of the rotor shaft. This can avoid adhesion.

It is preferable that at least one bearing unit comprises a venting hole system, which at least connects an axial surface of the rotor unit and facing away from the magnetic rotor unit through the rotor shaft with the circumferential surface of the bearing unit between the first bearing surface and the magnetic unit. Due to the fact that the part of the bearing comprising the second bearing surface is connected to the stator and the clearance between first and second bearing surface is small, there could be a lack of exchanging the lubricant of the bearings and venting the rotor space. This is important for wet-running electric motors in which the rotor space is filled with a fluid like water. Depending on the setup of the bearings the lubricant can surround the magnetic rotor unit and it can consist of the fluid, which is pumped by the electric motor of the pump. Therefore, a connection between the axial end of the magnetic rotor unit and the radial surface of the rotor shaft improves the transport of the fluid to the bearing at both axial sides of the bearing. If there is more than one bearing unit it has to be taken into account that every bearing unit has at least one fluid supply to every axial side for improving lubrication of each bearing, i. e. every bearing unit may comprise a venting hole system as defined above.

According to a preferred embodiment two bearing units are provided at both axial sides of the magnet unit. It has to be understood that one or both of the magnet units may be designed as described before. Preferably, both bearing units are designed in similar or identical manner. However, it is also possible that both bearing units may have a different design, in particular a different size.

The method for fabricating a magnetic rotor unit by injection moulding according to the invention implies that at least one bearing unit comprising a first bearing surface to be connected rotatably fixed with a rotor shaft and a second bearing surface being rotatable relative to the first bearing surface are attached to a magnet unit by injection moulding. First and second bearing surfaces are parts of a bearing and both surfaces face each other. Prior to moulding the required moulds have to be provided. Preferably there is only need for one mould with exchangeable inserts or cores for different moulding steps. Further preferable is the use of multi-component injection moulding to fabricate an integral work-piece consisting of different materials without further assembling steps. This can improve the durability of the magnet rotor unit by improving material features in certain parts of the magnetic rotor unit to provide for example an improved resistance against corrosion or abrasion and thermal stability for example.

In a first step a magnet unit is moulded containing magnetic material. A sleeve surrounding the magnetic material may be inserted into a mould prior to moulding. The magnetic material may be inserted in form of magnets into the mould prior to the moulding process. Alternatively, the magnetic material may be mixed with a plastic material and injected into the mould together with the molten plastic material. By this a plastic bonded magnet is formed. During the moulding process the sleeve is filled up with the moulding material. Preferably, at least one connection piece like a tenon or a notch is also formed by the moulding step, preferably axially aligned at one or both axial ends of the magnet unit. Prior or after the moulding step, the axial end section of the sleeve may be bent radially inwardly.

In a next step one or more bearing units are moulded. Each bearing unit consists of a bearing comprising a first and a second bearing surface facing each other and a rotor shaft. At least the rotor shaft, or parts of the rotor shaft, are formed during this second moulding step. The moulding material of the rotor shaft preferably also fills and/or encloses at least one connection piece to firmly connect the rotor shaft and therefore the bearing unit to the magnet unit. By the moulding of the rotor shaft of the bearing unit the entire bearing is connected to the magnet unit of the magnetic rotor unit. Thereby, a completely preassembled magnetic rotor unit also including the required bearings can be produced during the moulding process of the rotor shaft without further assembling steps for attaching bearings to the rotor.

The moulding material of the rotor shaft may cover at least the axial end sides of the magnet unit to ensure a firm connection and for sealing the magnet material inside the magnet unit against environmental influences, in particular contact with water. The moulding material of the rotor shaft may also enclose the bent end sections of the sleeve. Some of the typically used magnetic materials like neodymium magnet can corrode very easily. A long time stable protection of the magnets against corrosive fluids is very important. The sleeve which may surround the magnet unit is preferably made of non-corroding material like stainless steel and protect the magnetic material to the radial outer side. The enclosing of the bent end sections of the sleeve improves the impermeability of the axial ends of the magnetic unit. For example small cracks at the radially outer part in the magnet unit near or at the axial ends of the magnet unit are sealed by the moulded material of the rotor shaft. It is quite unlikely having cracks going through the moulded material of both, the magnetic unit and the rotor shaft, eluding the bent end sections of the sleeve. It has to be mentioned that the sleeve can preferably be formed by use of the injection pressure into the right shape. This can also secure pressure onto the magnet after shrinkage of the plastic bonded magnet especially to improve the shielding of the magnets against corrosive fluids.

Preferably, cavities of axial and radial venting holes are fabricated by use of suitable cores inserted into the mould prior to the moulding step of the bearing unit.

Prior to the injection moulding of the bearing unit at least the second bearing surface or part carrying this surface, respectively, is preferably inserted into the mould and after injection moulding the second bearing surface forms a bearing surface which is rotatable relative to the rotor unit. Further preferably the first bearing surface is formed by an outer surface of the plastic material of the rotor shaft by the injection moulding process. In this case only the part of the bearing unit containing the second bearing surface is inserted into the mould prior to the injection moulding.

It is especially preferable that a required clearance between the first and the second bearing surface is created by a shrinkage of the plastic material which is forming the first bearing surface. Therefore, there is no need of an additional material or a tool like a core, which separates first and second bearing surface during the moulding and which has to be removed after the moulding process. This required clearance between first and second bearing surface is therefore created within the injection moulding process without any additional steps during the fabricating process but just by the material properties of the used plastic material.

Instead of forming a first bearing surface by an outer surface of the rotor shaft, it is also possible that a first and a second bearing surface as surfaces of bearing parts or rings are inserted into the mould and the first part or bearing ring defining the first bearing surface is connected to the rotor shaft in rotatable fixed manner by the injection moulding process forming the rotor shaft. The plastic material of the rotor shaft comes into adhesive contact with the inserted first bearing part or bearing ring. Additionally the bearing part may have a roughened or structured surface allowing a positive-fit or locking of the plastic material and the bearing part. Therefore, the first bearing ring comprising the first bearing surface is moulded into the rotor shaft ensuring a secure connection.

It may be preferable that at least one part of the preassembled bearing consists of ceramics. This can increase the abrasion resistance of the said parts of the bearing. In a preferable embodiment at least an outer bearing ring of a radial bearing is a ceramic ring.

Preferably in a moulding step prior to the moulding of the bearing unit the bearing part comprising the second bearing surface can be formed by injection moulding of a plastic material. The used plastic material for this moulding step should preferably be different to the material that is used in the moulding step of the rotor shaft, especially to that part forming the first bearing surface. For example the different plastic materials can be chosen in such a manner, that adhesion between both plastic materials can be neglected. In case that both bearing parts comprising the first and second bearing surfaces are made from plastic material it may be possible to produce the entire bearing by multi-component injection moulding. For example in a first step an outer bearing ring forming a bearing part comprising the second bearing surface is moulded. Then, in a second step, the rotor shaft comprising the first, i. e. inner bearing surface, is moulded in direct contact with the second bearing surface moulded before. By shrinkage of the plastic material forming the first bearing surface during cooling the required gap between the first and second bearing surfaces is established. If necessary, additionally, a mould release agent may be applied onto the second bearing surface before moulding the part comprising the first bearing surface. It may be preferable to combine the moulding step of the part comprising the second bearing surface with the moulding step of the magnet unit. Both moulding steps may be done in the same mould, preferably in the mould that is also used for moulding the bearing unit.

As described above, it is preferable that in the first step at least one magnet and/or at least one plastic bonded magnet is moulded together with a plastic material to form a magnet unit. At least one magnet and/or at least one plastic bonded magnet in the rotor is further preferably aligned anisotropically during the injection moulding process. In the following step the magnet unit is connected to the bearing unit by injection moulding, as described before.

The invention is hereinafter described by way of example with reference to the attached figures. These are showing:
- Fig. 1: a first embodiment of a magnetic rotor unit, partly shown as a cross-section, with a plain surface of the first bearing surface,
- Fig. 2: a second embodiment of a magnetic rotor unit, partly shown as a cross-section with a first and second bearing surface with a curved shape,
- Fig. 3: a third embodiment of a magnetic rotor unit, partly shown as a cross-section and a first and second bearing surface with plain surfaces, and
- Fig. 4: a cross-section of the embodiment shown in Fig. 1.

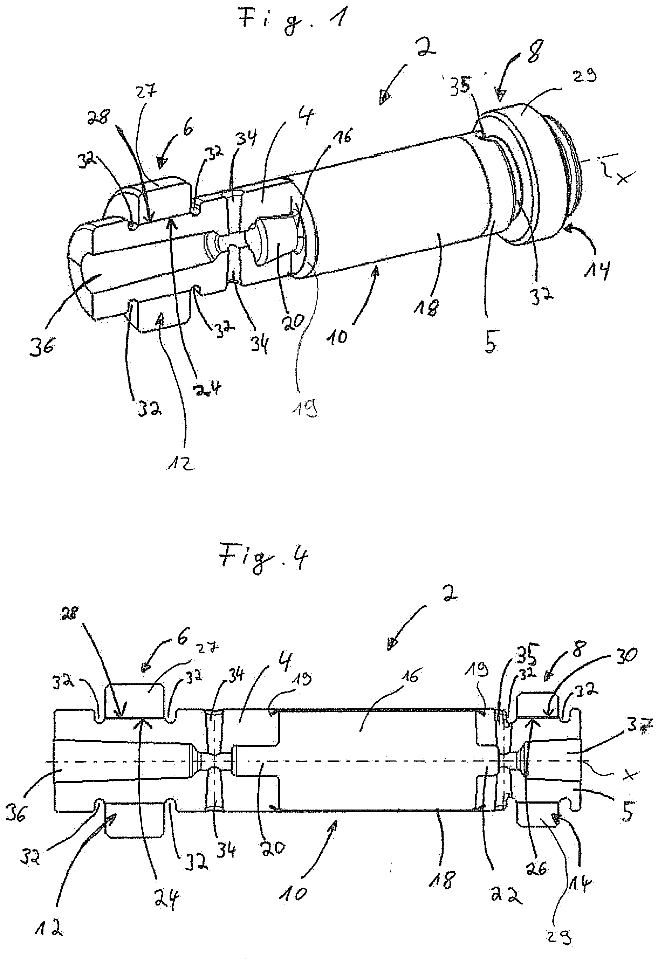

In the first embodiment shown in Fig. 1, a magnet rotor unit 2 comprises a magnet unit 10 and two bearing units 6, 8 each connected to one axial end of the magnet unit 10 in direction of the longitudinal axis X.

The magnet unit 10 comprises an injection-moulded core with magnets or plastic bonded magnets or hard magnetic material 16 circumferentially covered with a sleeve 18. The axial end sections 19 of the sleeve 18 are directed radially inwardly. The magnet unit 10 also comprises tenons 20, 22 at each axial end of the unit 10. The tenons 20, 22 as well as the radially inwardly directed axial end sections 19 of the sleeve 18 are enclosed with the injection-moulded plastic material of the bearing units 6, 8 during the moulding of the bearing units. Axial end sections 19 of the sleeve 18 as well as the tenons 20, 22 are connected by positive or form fit and/or firmly bonded with the mould material of the bearing units 6, 8. The axial end sections 19 of the sleeve 18 are enclosed by the moulding material of the bearing units 6 and 8 at the outer circumference. By this enclosure of the axial end sections 19 a better protection of the magnetic material inside the sleeve 18 against surrounding fluids can be provided. The enclosure of the end sections 19 prevents fluid or moisture from entering the inside of the rotor at the connection between sleeve 18 and the bearing units 6, 8. This avoids corrosion of the magnets or hard magnetic material 16. The tenon 20 at the first axial end of the magnet unit 10 has an axially longer shape than the tenon 22 at the opposite second axial end. The magnet unit 10 is moulded in a first moulding step and the bearing units 6, 8 are moulded and connected to the magnet unit 10 in a following second moulding step.

Both bearing units 6, 8 comprise the same prominent features but differ in sizes and dimensions. The first bearing unit 6, which is attached to the first axial end of the magnet unit 10 with the longer tenon 20, has a greater axial length and greater radially width than the second bearing unit 8, which is attached to the opposite second axial end of the magnet unit 10 with the short tenon 22. The first bearing unit 6 is designed to be connected to an impeller of a circulation pump.

Each bearing unit comprises a rotor shaft 4, 5 and a radial bearing 12, 14. First inner bearing surfaces 24, 26 of the radial bearings 12, 14 are formed by the moulded outer circumferential surfaces of the rotor shaft 4, 5. The first bearing surfaces 24, 26 have a plain outer surface and each of them is radially surrounded by an outer bearing ring 27, 29 with a second bearing surfaces 28, 30 having a plain inner surface. First bearing surfaces 24, 26, and the bearing surfaces 28, 30 of bearing rings 27, 29 form the radial bearings 12, 14. The bearing rings 27, 29 and the bearing surfaces 28, 30 formed thereon are advantageously made of ceramics.

Next to each axial side of both first bearing surfaces 24, 26 there are ring shaped grooves 32 formed in the rotor shaft 4 and extending concentrically around longitudinal direction X. All grooves 32 have the same form. The outer diameters of those parts of the rotor shaft 4, which are next to said grooves 32, are greater than the inner diameters of the second bearing surfaces 28, 30, so that the outer bearing rings 27, 29 are restricted in their axial movability.

Each bearing unit 6, 8 possesses radial venting holes 34, 35 and an axial venting hole 36, 37 which are connected in a conducting manner to each other. Each radial venting hole 34, 35 crosses the rotor shaft 4, 5 and their longitudinal axis X radially. Both openings of each radial venting hole 34, 35 are diametrically opposed at the outer surface of the rotor shaft 4, 5 between the bearing 12, 14 and the magnetic unit 10. The axial venting holes 36, 37 extend inside the rotor shaft along the axial direction X of the rotor shaft axially centered. The first axial venting hole 36 is opened to the first axial end of the rotor shaft 4 opposite to the magnetic unit 10. This first axial venting hole 36 is connected with the first radial venting hole 34. On the opposite axial end of the magnetic rotor unit the second axial venting hole 37 extends inside the rotor shaft 5. The axial venting hole 37 is opened to the second axial end side of the rotor shaft 5 opposite to the magnetic unit 10. The second axial venting hole 37 is connected with the second radial venting hole 35. The venting holes 34, 35, 36, 37 allow to vent the rotor space in particular if the magnetic rotor unit 2 is arranged inside a rotor can of wet-running electric motor.

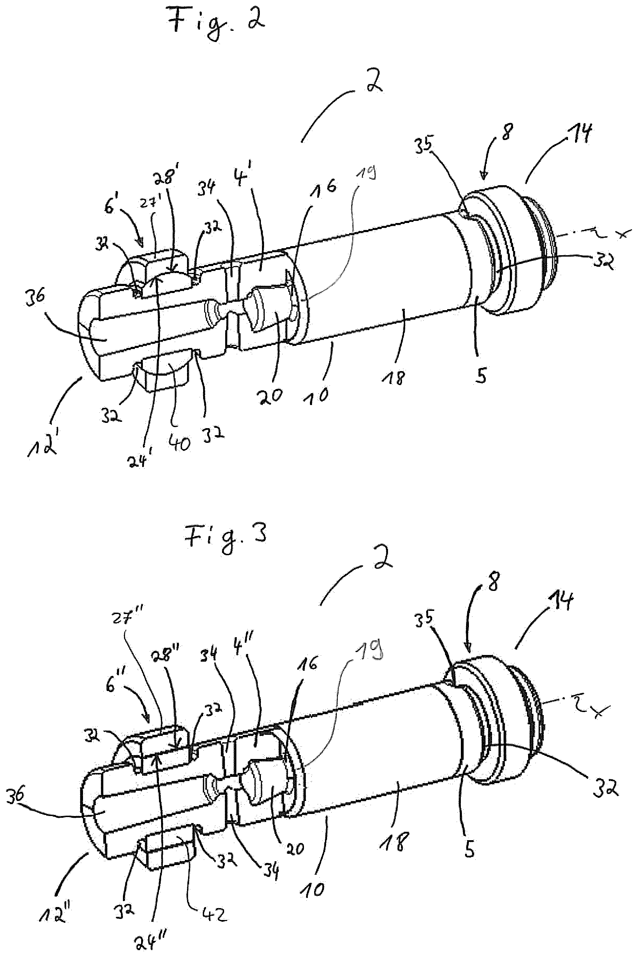

Two additional embodiments are shown in Fig. 2 and 3 respectively. Equal features can be taken from previous description and are indicated by identical reference numerals. These embodiments differ from the embodiment shown in Fig. 1 in that the first bearing surfaces 24', 24" of the first bearing units 12', 12" are not formed by the surface of the rotor shaft 4', 4" but they are formed on bearing rings 40, 42 which are inserted into the mould together with the bearing rings 27', 27" as assembly groups prior to the moulding. All bearing rings 40, 42 and 27', 27" are pre-assembled prior to the moulding and advantageously made of ceramics. Bearing units 6' and 6" are connected to the rotor shafts 4' and 4" by moulding, i. e. the plastic material of rotor shaft 4', 4" comes into adhesive contact and/or positive-fit with inner bearing rings 40, 42 and thus are firmly connected in a rotationally fixed manner with the rotor shaft 4', 4".

The embodiment in Fig. 2 comprises bearing rings 40 and 27', which have facing first 24' and second surfaces 28' with curved or toroidal outer shapes. In contrast to this, the embodiment shown in Fig. 3 comprises bearing rings 42" and 27" having facing first 24" and second surfaces 28" with plain or cylindrical shapes.

### List of reference numerals

- 2: magnetic rotor unit
- 4, 4', 4": rotor shaft
- 5: rotor shaft
- 6, 6', 6": first bearing unit
- 8: second bearing unit
- 10: magnet unit
- 12: first radial bearing
- 14: second radial bearing
- 16: magnets or plastic-bonded magnets
- 18: sleeve
- 19: axial end sections of sleeve 18
- 20: long tenon
- 22: short tenon
- 24, 24', 24": first bearing surface
- 26: first bearing surface
- 27, 27', 27" 29: outer bearing rings
- 28, 28', 28": second bearing surface
- 30: second bearing surface
- 32: grooves
- 34, 35: radial venting hole
- 36, 37: axial venting hole
- 40, 42: inner bearing ring

- X: longitudinal direction

## Claims

1. Magnetic rotor (2) unit for an electric motor, which rotor unit (2) is manufactured from plastic material comprising a magnet unit (10) and at least one bearing unit (6, 8) comprising a first bearing surface (24, 26) arranged in rotatably fixed manner to a rotor shaft (4, 5) **characterised by** said bearing unit comprising a second bearing surface (28, 30) being rotatable relative to the first bearing surface (24, 26) wherein said bearing unit (6, 8) forms an assembly group and said bearing unit (6, 8) is connected to the magnet unit (10) by moulding.

2. Magnetic rotor unit according to claim 1, **characterized in that** at least a part of the bearing unit (6, 8) carrying the first bearing surface (24, 26) and connected to the magnet unit (10) is formed by the moulding.

3. Magnetic rotor unit according to claim 1 or 2, **characterized in that** the bearing surfaces (24, 28, 26, 30) of the bearing unit (6, 8) are connected together non-detachably.

4. Magnetic rotor unit according to any of the preceding claims, **characterized in that** the bearing unit (6, 8) comprises a radial and/or axial bearing (12, 14).

5. Magnetic rotor unit according to any of the preceding claims, **characterized in that** the first bearing surface (24, 26) is formed by the outer surface of the moulded rotor shaft (4, 5) connected to the magnet unit (10).

6. Magnetic rotor unit according to any of the preceding claims, **characterized in that** the outer surface of the first bearing surface (24, 24", 26) in axial direction (X) has a plane surface or a curved shape.

7. Magnetic rotor according to any of the preceding claims, **characterized by** a ring shaped groove (32) at the outer circumference of the rotor shaft (4, 5) next to at least one first bearing surface (24, 26) at at least one axial side of the bearing surface (24, 26).

8. Magnetic rotor unit according to any of the preceding claims, **characterized in that** next to at least one axial side of the bearing surface (24, 26) or next to said groove (32) the outer diameter of the rotor shaft (4, 5) is greater than the inner diameter of the second bearing surface (28, 30).

9. Magnetic rotor unit according to any of the preceding claims, **characterized in that** the magnet unit (10) comprises at least one magnet (16) and/or at least one plastic-bonded magnet (16) and a sleeve (18) enclosing at least the part of the rotor unit (2) including the magnet (16) and/or the plastic-bonded magnet (16), wherein at least one axial end section (19) of the sleeve (18) is directed radial inwardly.

10. Magnetic rotor unit according to any of the preceding claims, **characterized in that** the magnet unit (10) comprises a connection piece (20, 22), preferably a tenon or a notch, which is moulded within the bearing unit (6, 8) with positive locking.

11. Magnetic rotor unit according to any of the preceding claims, **characterized in that** the bearing unit (6, 8) is attached to the axial end of the magnet unit (10).

12. Magnetic rotor unit according to any of the preceding claims, **characterized in that** at least one part of the bearing unit (6, 8) consists of ceramics and / or plastic material.

13. Magnetic rotor unit according to any of the preceding claims, **characterized in that** at least one bearing unit (6, 8) comprises a venting hole system (34, 35, 36, 37), which at least connects an axial surface of the magnetic rotor unit (2) through the rotor shaft (4, 5) with radial circumferential surface of the bearing unit (6, 8) between the first bearing surface (24, 26) and the magnetic unit (10).

14. A method for fabricating a magnetic rotor unit (2) according to claim 1 by injection moulding.

15. The method according to claim 14, **characterized in that** prior to injection moulding of the bearing unit (6, 8) at least the second bearing surface (28, 30) is inserted into a mould and that after injection moulding the second bearing surface (28, 30) forms a bearing surface which is rotatable relative to the rotor shaft (4, 5).

16. The method according to claims 14 or 15, **characterized in that** the first bearing surface (24, 26) is formed by an outer surface of a plastic material of the rotor shaft (4, 5) by the injection moulding process.

17. The method according to claim 16, **characterized in that** a required clearance between the first (24, 26) and the second (28, 30) bearing surface is created by shrinkage of the plastic material, which is forming the first bearing surface (24, 26).

18. The method according to claim 14 or 15, **characterized in that** the parts forming a first (24', 24") and a second bearing surface (24', 24") are inserted into a mould and the first bearing surface (28, 30) is connected to the rotor shaft (4, 5) in rotatably fixed manner in the injection moulding process forming the rotor shaft (4, 5).

19. A method according to any of the claims 14 to 18, **characterized in that** in a first step at least one magnet (16) and/or at least one plastic-bonded magnet (16) is moulded together with a plastic material to form a magnet unit (10) and in a following step the magnet (10) unit is connected to the bearing unit (6, 8) by injection moulding.

## Patentansprüche

1. Magnetrotoreinheit (2) für einen Elektromotor, wobei die Rotoreinheit (2) aus einem Kunststoffmaterial hergestellt ist, aufweisend: eine magnetische Einheit (10) und wenigstens eine Lagereinheit (6, 8) mit einer ersten Lauffläche (24, 26), die drehfest an einer Rotorwelle (4, 5) angeordnet ist, **dadurch gekennzeichnet, dass** die Lagereinheit eine zweite Lauffläche (28, 30) aufweist, die in Bezug auf die erste Lauffläche (24, 26) drehbar ist, wobei die Lagereinheit (6, 8) eine Baugruppe bildet, und wobei die Lagereinheit (6, 8) durch Formpressen mit der magnetischen Einheit (10) verbunden ist.

2. Magnetrotoreinheit nach Anspruch 1, **dadurch gekennzeichnet, dass** wenigstens ein Teil der Lagereinheit (6, 8), der die erste Lauffläche (24, 26) trägt und mit der magnetische Einheit (10) verbunden ist, durch das Formpressen geformt ist.

3. Magnetrotoreinheit nach Anspruch 1 oder 2, **dadurch gekennzeichnet, dass** die Laufflächen (24, 28, 26, 30) der Lagereinheit (6, 8) miteinander nicht abnehmbar verbunden sind.

4. Magnetrotoreinheit nach einem der vorangehenden Ansprüche, **dadurch gekennzeichnet, dass** die Lagereinheit (6, 8) ein Radial- und/oder Axiallager (12, 14) enthält.

5. Magnetrotoreinheit nach einem der vorangehenden Ansprüche, **dadurch gekennzeichnet, dass** die erste Lauffläche (24, 26) durch die Außenfläche der formgepressten Rotorwelle (4, 5) gebildet wird, die mit der magnetischen Einheit (10) verbunden ist.

6. Magnetrotoreinheit nach einem der vorangehenden Ansprüche, **dadurch gekennzeichnet, dass** die Außenfläche der ersten Lauffläche (24, 24", 26) in Axialrichtung (X) eine ebene Oberfläche oder eine gekrümmte Gestalt aufweist.

7. Magnetischer Rotor nach einem der vorangehenden Ansprüche, **gekennzeichnet durch** eine ringförmig gestaltete Nut (32) an dem Außenumfang der Rotorwelle (4, 5) unmittelbar benachbart zu wenigstens einer ersten Lauffläche (24, 26) auf wenigstens einer axialen Seite der Lauffläche (24, 26).

8. Magnetrotoreinheit nach einem der vorangehenden Ansprüche, **dadurch gekennzeichnet, dass** der Außendurchmesser der Rotorwelle (4, 5) unmittelbar benachbart zu wenigstens einer axialen Seite der Lauffläche (24, 26) oder unmittelbar benachbart zu der Nut (32) größer ist als der Innendurchmesser der zweiten Lauffläche (28, 30).

9. Magnetrotoreinheit nach einem der vorangehenden Ansprüche, **dadurch gekennzeichnet, dass** die magnetische Einheit (10) wenigstens einen Magneten (16) und/oder wenigstens einen mittels Kunststoff geklebten Magneten (16) und eine Hülse (18) enthält, die wenigstens den Teil der Rotoreinheit (2) umschließt, der den Magneten (16) und/oder den mittels Kunststoff geklebten Magneten (16) aufweist, wobei wenigstens ein axialer Endabschnitt (19) der Hülse (18) radial nach innen gerichtet ist.

10. Magnetrotoreinheit nach einem der vorangehenden Ansprüche, **dadurch gekennzeichnet, dass** die magnetische Einheit (10) ein Verbindungsstück (20, 22), vorzugsweise einen Zapfen oder eine Aussparung, aufweist, das innerhalb der Lagereinheit (6, 8) mittels einer formschlüssigen Verriegelung formgepresst ist.

11. Magnetrotoreinheit nach einem der vorangehenden Ansprüche, **dadurch gekennzeichnet, dass** die Lagereinheit (6, 8) an dem axialen Ende der magnetischen Einheit (10) angebracht ist.

12. Magnetrotoreinheit nach einem der vorangehenden Ansprüche, **dadurch gekennzeichnet, dass** wenigstens ein Teil der Lagereinheit (6, 8) auf Keramikwerkstoffen und/oder auf einem Kunststoffmaterial basiert.

13. Magnetrotoreinheit nach einem der vorangehenden Ansprüche, **dadurch gekennzeichnet, dass** wenigstens eine Lagereinheit (6, 8) ein Entlüftungslochsystem (34, 35, 36, 37) aufweist, das zwischen der ersten Lauffläche (24, 26) und der magnetischen Einheit (10) wenigstens eine axiale Fläche der Magnetrotoreinheit (2) durch die Rotorwelle (4, 5) hindurch mit einer radialen Umfangsfläche der Lagereinheit (6, 8) verbindet.

14. Verfahren zum Herstellen einer Magnetrotoreinheit (2) nach Anspruch 1 durch Spritzgießen.

15. Verfahren nach Anspruch 14, **dadurch gekennzeichnet, dass** wenigstens die zweite Lauffläche (28, 30) vor dem Spritzgießen der Lagereinheit (6, 8) in eine Gießform eingeführt wird, und dass die zweite Lauffläche (28, 30) nach dem Spritzgießen eine Lauffläche bildet, die relativ zu der Rotorwelle (4, 5) drehbar ist.

16. Verfahren nach den Ansprüchen 14 oder 15, **dadurch gekennzeichnet, dass** die erste Lauffläche (24, 26) durch eine Außenfläche eines Kunststoffmaterials der Rotorwelle (4, 5) mittels des Spritzgussvorgangs gebildet wird.

17. Verfahren nach Anspruch 16, **dadurch gekennzeichnet, dass** ein erforderlicher Freiraum zwischen der ersten (24, 26) und der zweiten (28, 30) Lauffläche durch Schrumpfen des Kunststoffmaterials erzeugt wird, so dass dadurch die erste Lauffläche (24, 26) geformt wird.

18. Verfahren nach Anspruch 14 oder 15, **dadurch gekennzeichnet, dass** die Teile, die eine erste (24', 24") und eine zweite Lauffläche (24', 24") bilden, in eine Gießform eingeführt werden, und die erste Lauffläche (28, 30) mit der Rotorwelle (4, 5) drehfest in dem Spritzgussvorgang verbunden wird, der die Rotorwelle (4, 5) formt.

19. Verfahren nach einem beliebigen der Ansprüche 14 bis 18, **dadurch gekennzeichnet, dass** wenigstens ein Magnet (16) und/oder wenigstens ein mittels Kunststoff geklebter Magnet (16) in einem ersten Schritt mit einem Kunststoffmaterial vergossen wird, um eine magnetische Einheit (10) zu bilden, und die magnetische Einheit (10) in einem folgenden Schritt durch Spritzgießen mit der Lagereinheit (6, 8) verbunden wird.

## Revendications

1. Unité de rotor magnétique (2) pour un moteur électrique, cette unité de rotor (2) étant fabriquée à partir de matière plastique comprenant une unité d'aimant (10) et au moins une unité de palier (6, 8) qui comprend une première surface de palier (24, 26) disposée de manière fixe en rotation sur un arbre de rotor (4, 5), **caractérisée en ce que** ladite unité de palier comprend une deuxième surface de palier (28, 30) mobile en rotation par rapport à la première surface de palier (24, 26), dans laquelle ladite unité de palier (6, 8) forme un groupe d'assemblage et ladite unité de palier (6, 8) est reliée à l'unité d'aimant (10) par moulage.

2. Unité de rotor magnétique selon la revendication 1, **caractérisée en ce qu'**au moins une partie de l'unité de palier (6, 8) portant la première surface de palier (24, 26) et reliée à l'unité d'aimant (10) est formée par le moulage.

3. Unité de rotor magnétique selon la revendication 1 ou 2, **caractérisée en ce que** les surfaces de palier (24, 28, 26, 30) de l'unité de palier (6, 8) sont reliées entre elles de manière non détachable.

4. Unité de rotor magnétique selon l'une quelconque des revendications précédentes, **caractérisée en ce que** l'unité de palier (6, 8) comprend un palier radial et/ou axial (12, 14).

5. Unité de rotor magnétique selon l'une quelconque des revendications précédentes, **caractérisée en ce que** la première surface de palier (24, 26) est formée par la surface extérieure de l'arbre de rotor (4, 5) moulé relié à l'unité d'aimant (10).

6. Unité de rotor magnétique selon l'une quelconque des revendications précédentes, **caractérisée en ce que** la surface extérieure de la première surface de palier (24, 24", 26) présente selon la direction axiale (X) une surface plane ou une forme incurvée.

7. Rotor magnétique selon l'une quelconque des revendications précédentes, **caractérisé par** une rainure (32) de forme annulaire sur la circonférence extérieure de l'arbre de rotor (4, 5) au voisinage d'au moins une première surface de palier (24, 26) sur au moins un côté axial de la surface de palier (24, 26).

8. Unité de rotor magnétique selon l'une quelconque des revendications précédentes, **caractérisée en ce que**, au voisinage d'au moins un côté axial de la surface de palier (24, 26) ou au voisinage de ladite rainure (32), le diamètre extérieur de l'arbre de rotor (4, 5) est supérieur au diamètre intérieur de la deuxième surface de palier (28, 30).

9. Unité de rotor magnétique selon l'une quelconque des revendications précédentes, **caractérisée en ce que** l'unité d'aimant (10) comprend au moins un aimant (16) et/ou au moins un aimant à liant plastique (16) et un manchon (18) renfermant au moins la partie de l'unité de rotor (2) incluant l'aimant (16) et/ou l'aimant à liant plastique (16), dans laquelle au moins une section d'extrémité axiale (19) du manchon (18) est dirigée radialement vers l'intérieur.

10. Unité de rotor magnétique selon l'une quelconque des revendications précédentes, **caractérisée en ce que** l'unité d'aimant (10) comprend une pièce de liaison (20, 22), de préférence un tenon ou une encoche, qui est moulée à l'intérieur de l'unité de palier (6, 8) avec un verrouillage positif.

11. Unité de rotor magnétique selon l'une quelconque des revendications précédentes, **caractérisée en ce que** l'unité de palier (6, 8) est fixée à l'extrémité axiale de l'unité d'aimant (10).

12. Unité de rotor magnétique selon l'une quelconque des revendications précédentes, **caractérisée en ce qu'**au moins une partie de l'unité de palier (6, 8) est constituée de céramiques et/ou d'une matière plastique.

13. Unité de rotor magnétique selon l'une quelconque des revendications précédentes, **caractérisée en ce qu'**au moins une unité de palier (6, 8) comprend un système d'orifice de ventilation (34, 35, 36, 37), qui relie au moins une surface axiale de l'unité de rotor magnétique (2), par l'intermédiaire de l'arbre de rotor (4, 5), à la surface circonférentielle radiale de l'unité de palier (6, 8) entre la première surface de palier (24, 26) et l'unité magnétique (10).

14. Procédé pour fabriquer une unité de rotor magnétique (2) selon la revendication 1 par moulage par injection.

15. Procédé selon la revendication 14, **caractérisé en ce que**, avant le moulage par injection de l'unité de palier (6, 8), au moins la deuxième surface de palier (28, 30) est insérée dans un moule, et **en ce que**, après le moulage par injection, la deuxième surface de palier (28, 30) forme une surface de palier qui peut tourner par rapport à l'arbre de rotor (4, 5).

16. Procédé selon les revendications 14 ou 15, **caractérisé en ce que** la première surface de palier (24, 26) est formée par une surface extérieure en une matière plastique de l'arbre de rotor (4, 5) par le processus de moulage par injection.

17. Procédé selon la revendication 16, **caractérisé en ce qu'**un espacement requis entre la première (24, 26) et la deuxième (28, 30) surfaces de palier est créé par rétraction de la matière plastique qui forme la première surface de palier (24, 26).

18. Procédé selon la revendication 14 ou 15, **caractérisé en ce que** les parties formant une première (24', 24") et une deuxième (24', 24") surface de palier sont insérées dans un moule, et **en ce que** la première surface de palier (28, 30) est reliée à l'arbre de rotor (4, 5) de manière fixe en rotation dans le processus de moulage par injection formant l'arbre de rotor (4, 5).

19. Procédé selon l'une quelconque des revendications 14 à 18, **caractérisé en ce que**, dans une première étape, au moins un aimant (16) et/ou au moins un aimant à liant plastique (16) est moulé avec une matière plastique de façon à former une unité d'aimant (10), et dans une étape suivante, l'unité d'aimant (10) est reliée à l'unité de palier (6, 8) par moulage par injection.
